Europäisches Patentamt

European Patent Office

Office européen des brevets

(11) Publication number: **0 294 211**
**A2**

(12) # EUROPEAN PATENT APPLICATION

(21) Application number: **88305074.2**

(22) Date of filing: **03.06.88**

(51) Int. Cl.⁴: **A 24 C 5/34**

(30) Priority: **05.06.87 US 58957**

(43) Date of publication of application:
**07.12.88 Bulletin 88/49**

(84) Designated Contracting States: **DE FR GB**

(71) Applicant: **CELANESE FIBERS, INC.**
**1211 Avenue of the Americas**
**New York New York 10036 (US)**

(72) Inventor: **Aliotti, Perry G.**
**2841 Hillsdale Avenue**
**Charlotte North Carolina (US)**

**Bulla, Jackie N.**
**8116 Albemarle Road**
**Charlotte North Carolina (US)**

(74) Representative: **De Minvielle-Devaux, Ian Benedict Peter**
**et al**
**CARPMAELS & RANSFORD 43, Bloomsbury Square**
**London WC1A 2RA (GB)**

(54) **Mounting structure for apparatus which measures on-line the diameter of cylindrical objects for example, cigarette filter rods.**

(57) Mounting structure for apparatus which measures on-line the diameter of cylindrical objects, for example, cigarette filter rods, and systems which employ such mounting structure and apparatus are disclosed. The mounting structure includes a pair of fixed-position spaced-apart support flanges and a support platform positioned between the support flanges and sized and configured to support the diameter-measuring apparatus. The support platform is journally coupled to the support flanges to permit oscillatory motion of the support platform about the longitudinal axis of the filter rod. The support platform includes a spindle which is adapted for mateable engagement within the bore of the diameter-measuring apparatus and defines a cylindrical opening coaxially aligned with the filter rod's longitudinal axis so that the filter rod will longitudinally pass therethrough. The spindle also defines an annular slot transverse to the filter rod's longitudinal axis and positioned so as to be coincident with the plane of the light beam emitted by the diameter-measuring apparatus. In such a manner, the emitted light beam will oscillate within the plane unobstructed by the spindle when the support platform oscillates.

FIG. 3

**Description**

## MOUNTING STRUCTURE FOR APPARATUS WHICH MEASURES ON-LINE THE DIAMETER OF CYLINDRICAL OBJECTS, FOR EXAMPLE, CIGARETTE FILTER RODS

### Field Of Invention

The present invention relates generally to mounting structure for apparatus which measures on-line the diameter of cylindrical objects in addition to systems which employ such mounting structure and apparatus. More particularly, this invention relates to mounting structure which enables noncontact type diameter-measuring apparatus to be oscillated about the longitudinal axis of the cylindrical object so as to measure accurately its diameter and/or to control in an on-line manner the resulting diameter of the object. The mounting structure and the system employing the same find particular utility in measuring and controlling the diameter of cylindrical objects normally having some peripheral surface irregularities, such as, cigarette filter rods.

### Background Of The Invention

Cigarette filter rods have for many years been comprised of longitudinally extended crimped filaments bonded to one another at their contact points by solvation bonds. The procedure for producing such filters involves generally producing a tow (or untwisted bundle of several thousand continuous filaments), crimping the tow, opening the tow to deregister adjacent crimps, pulling the tow through a plasticizer applicator, and thereafter treating the plasticized tow to reduce its cross-sectional size until it is approximately equal to the cross-sectional size of a cigarette. The condensed mass is formed into a coherent rod-shaped structure, typically by wrapping paper around its circumference and severing the wrapped rods into segments of predetermined length. The rod segments are thereafter cured so as to effect bonding between adjacent filaments at their contact points.

One important processing variable in the formation of cigarette filter rods is the need to maintain accurate control over the diameter, and thus circumference, of the formed filter rods. As with virtually any continuous process, variations occur during cigarette filter rod forming which may cause physical characteristics of the resulting product to vary from a desired set point. Nonuniformities in the resulting filter rods may occur, for example, due to more or less tow being supplied to the rod-forming apparatus which results in cross-sectional variations along the longitudinal length of the formed rod.

Previously, filter rod diameter control has been effected manually. According to this prior technique, a number of formed rods would be tested off-line for a variety of physical characteristics, including circumference and diameter measurements. Based upon such data, the operator of the rod-forming apparatus would then typically set the rod-forming apparatus so that, for a given tow item, the formed filter rods would meet the desired process specifications. Since the production of cigarette filter rods is continuous (e.g. up to about 4,000 rods being formed per minute), such an off-line manual method of gathering diameter data and then taking corrective action obviously results in significant tow waste.

One other prior technique to determine diameter (or circumference) dimensions of cigarette filter rods involves blowing a continuous stream of air across the rod so as to create a positive pressure environment which varied as a function of the rod's circumference. This positive pressure could then be detected and correlated into a measurement of the rod's circumference. The circumference measurement data could then be supplied via suitable signal to the rod forming apparatus so as to adjust automatically the rod's diameter to thereby provide on-line control thereof. A problem with this prior technique, however, is that the positive pressure/ rod circumference correlation is disturbed when a porous wrapping paper is utilized to maintain the rod in its coherent rod-shaped structure thereby causing erroneous circumference measurements.

Recently it has been proposed in U.S. Patent Nos. 4,567,372 and 4,571,497 to detect continuously the perimeter of wrapped objects, such as cigarette filter rods. In accordance with these patents, the wrapping material includes a pair of detectable parallel lines formed thereon such that the lines extend axially parallel to the filter rod. A video camera then detects the distance between the lines when the wrapping material has been wrapped around the compacted bundle of filaments. The thus detected distance between the lines is then correlated automatically into a perimeter dimension of the filter rod.

It is also well known to use radiation emitter/detector apparatus, for example, the radiation which is supplied by a laser system. However, such systems are typically used in a stationary manner with respect to the object whose geometry is being sensed. Such systems can employ one or several light sources projected transversely to the axis of the cylindrical object and respective detectors located on the opposite side thereof. The detector, in essence, senses that portion of the laser light beam which is not blocked by the cylindrical object so as to thereby sense a "shadow profile" thereof. This date may then be correlated into a diameter (or circumference) measurement of the object.

One problem inherent in the production of cigarette filter rods is that, since the filter rods are formed of a compressible medium, some irregularity in the diameter of the formed filter rods naturally occurs. Moreover, since a paper material is wrapped around the bundle of fibers and is maintained in its wrapped condition by a longitudinally extended glue line or seam, any measurement device which is sufficiently sensitive so as to detect the seam will provide an erroneous indication of the rod's actual diameter. While stationary detectors could be positioned at an angle so that the glue line is "hidden", such a practice still does not yield satisfactory diameter measurements with respect to cigarette filter rods due to the inherent irregularity in the rod's diameter for the reasons mentioned above.

Accordingly, what has been needed is some means which would, in effect, normalize such diameter irregularity in a cigarette filter rod so as to achieve more accurate measurement of the rod's true diameter and thus permit more accurate control over this important processing parameter. Moreover, an on-line system has been needed so that tow waste is minimized. It is towards solutions to these problems that the present invention is directed.

## Summary Of The Present Invention

The present invention provides mounting structure adapted to mount a noncontact type diameter-measuring apparatus. The noncontact apparatus is more specifically preferably of the type which includes a bore for longitudinally receiving a cigarette filter rod whose diameter is to be measured, and a light beam emitter/detector for emitting at least one light beam across the bore in a plane transverse to the longitudinal dimension of the filter rod and for detecting that portion of the light beam not blocked by the presence of the filter rod in the bore. The mounting structure of this invention thus mounts such a diameter-measuring apparatus so as to permit it to oscillate about the longitudinal axis of the filter rod (which is coincident with the central axis of a path traveled by the rod). Thus, as the filter rod is longitudinally conveyed through the bore of the diameter-measuring apparatus, the data obtained will, in effect, be normalized due to the oscillatory motion imparted via this invention so as to achieve more accurate diameter measurement and subsequent control over the formation of the filter rod.

The mounting structure of this invention includes a pair of fixed-position support flanges which are spaced-apart from one another in the direction of conveyance of the cigarette filter rod. A support platform is positioned between the pair of support flanges and is sized and configured to support the diameter-measuring apparatus so that the bore of the diameter-measuring apparatus is coaxially aligned with the central axis of the rod's path of conveyance (and thus also coaxially aligned with the longitudinal axis of the rod). The support platform is journaled to the support flanges by suitable bushings so that the support platform is capable of oscillatory (i.e. rotational) motion about the longitudinal axis of the filter rod.

The support platform includes a spindle which is mateably engaged within the bore of the diameter-measuring apparatus and defines a cylindrical opening also coaxially aligned with the longitudinal axis of the filter rod so as to permit the rod to pass therethrough as it is conveyed along its path. Also, the spindle defines an annular slot transverse to the central axis and positioned so as to be coincident with the plate of the light beam(s) emitted by the diameter-measuring apparatus. In such a manner, the diameter-measuring apparatus is capable of oscillating concurrently with the oscillation of the support platform and thus the emitted light beam(s) will also move within the plane unobstructed by the spindle. The light beam(s) of the diameter-measuring apparatus thus "see" a greater portion of the rod's periphery due to such oscillatory motion as compared to use of the diameter-measuring apparatus in a stationary mode to thereby "normalize" diameter data obtained therefrom.

The support platform is driven to produce oscillatory motion by any suitable electric or pneumatic means. Preferably, such drive means is a variable speed motor, the output of which is interconnected via suitable linkage structure to permit the support platform to reciprocally oscillate between forwardmost and rearwardmost positions thereby circumscribing an arc of at least 45°. Of course, arcs greater or less than 45° may be employed depending upon the processing environment, the object being sensed, etc. by suitable selection of the drive and/or linkage structure.

The output signal of the diameter-measuring apparatus may be supplied to a controller which compares the signal to a stored diameter set point. The controller may then issue an error signal if the detected diameter is outside the set point for a particular cigarette filter rod product, the signal being received by an electronic actuator operatively associated with the rod-forming apparatus so as to decrease (or increase) the cross-sectional size of the formed rod.

Other advantages and aspects of this invention will become more clear to the reader after consideration is given to the detailed description thereof which follows. It should be understood however that while reference has been, and will hereinafter be, made to cigarette filter rods whose diameters are to be measured, the present invention could suitably be utilized in any processing environment to measure the diameter of virtually any cylindrical object such as, wire, pipe, hose, tubing, and the like. Hence, reference to a cigarette filter rod as the cylindrical object whose diameter is to be sensed represents a presently preferred nonlimiting utility for the subject invention.

## Brief Description Of The Accompanying Drawings

Reference will hereinafter be made to the accompanying drawings wherein like reference numerals throughout the various Figures denote like structural elements and, wherein:

Figure 1 is a schematic representation of a cigarette filter rod forming apparatus with which the present invention is particularly well suited for use;

Figure 2 is a schematic representation of a preferred noncontact type diameter-measuring apparatus which the mounting structure of this invention is capable of mounting for oscillatory motion about the longitudinal axis of a cylindrical object;

Figure 3 is a top plan view of the mounting structure of this invention;

Figure 4 is a side elevational view taken along lines 4-4 in Figure 3;

Figure 5 is a rear perspective view of a system of this invention employing a diameter-measuring apparatus and mounting structure therefore and particularly showing the preferred drive means for producing oscillatory motion of the mounting structure, and hence, the diameter-measuring apparatus; and

Figure 6 is a front perspective view of the system shown in Figure 5 (but not showing the drive means associated therewith).

## Detailed Description Of The Preferred Exemplary Embodiment

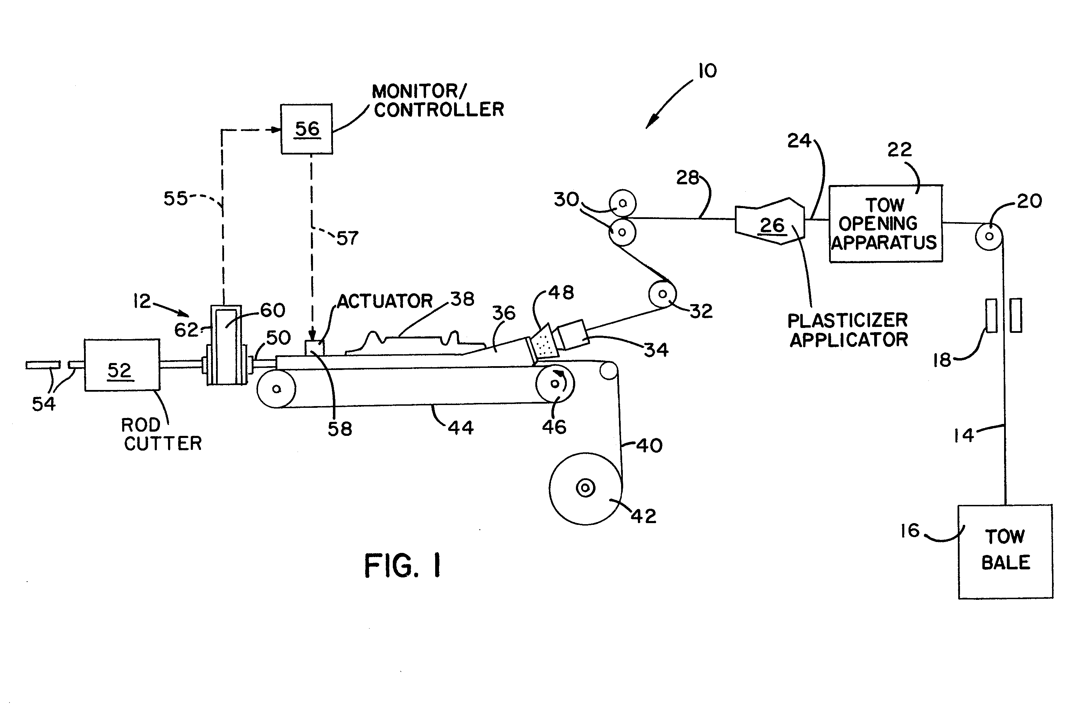

A cigarette filter rod-forming apparatus 10 with which the diameter-measuring system 12 of this invention is particularly well suited for use is shown schematically in accompanying Figure 1. As can be seen, a crimped filamentary tow 14 is removed from a supply bale 16 and passes through a pneumatic banding jet 18 which initially spreads the tow laterally to thereby provide preliminary opening thereof. The tow 14 then passes over idler roll 20 into a suitable tow opening apparatus 22 which serves to open fully the tow and thus deregister adjacent crimps thereof. Tow opening apparatus 22 can be of any suitable variety, for example, that type which utilizes differential gripping action accomplished by means of a pair of rollers, one of which is a smooth surface while the other is grooved over its entire periphery as is described in U.S. Patent Nos. 3,032,829 and 3,156,016. Another suitable apparatus for opening crimped tow is that described in U.S. Patent No. 3,099,594 wherein the crimped tow is fed into a jet supplied with high velocity gas so as to cause the tow to be "bloomed".

The thus opened tow (now designated by reference numeral 24) may then be forwarded to a plasticizer applicator 26 of conventional construction. Preferably, the plasticizer applicator 26 applies a suitable plasticizer (for example, triethylcitrate, dimethylethylphthalate, or the dimethyl ether of triethylene or tetraethylene glycol) to the opened tow band 24 by means of a rotating disc as is described in U.S. Patent No. 3,387,992. Other applicators which are adapted to apply plasticizers to a continuous web may also be employed and could include wick, brush or spray nozzle type plasticizer applicators.

The plasticized tow band (now designated by reference numeral 28) is then forwarded to the nip formed between a pair of delivery rolls 30 and is guided via guide member 32 into a pneumatic forwarding jet 34. One preferred pneumatic forwarding jet is Model No. 61-0-0-DF commercially available from Hauni-Werke Korber & Co. KG, Hamburg, West Germany. Pneumatic forwarding jet 34 pushes the opened and plasticized tow into the tongue 36 of garniture member 38 which serves to form the tow 28 into a coherent rod-shaped mass. A paper band 40 from supply reel 42 is concurrently advanced into the tongue 36 of garniture 38, both the wrapping paper 40 and the tow 28 being supported during the compaction phase in garniture 38 by means of endless belt member 44 which is driven by any suitable means, such as, by driven roll 46. One preferred means of forwarding plasticized tow band 28 into the tongue of garniture member 36 is described in U.S. Patent No. 4,522,616 (the entire disclosure being incorporated fully hereinto by reference) and employs a perforated funnel member 48 which permits air from the pneumatic forwarding jet 34 to escape radially so as to allow the tow 28 to be overfed and accumulate in a relaxed state within funnel 48 prior to compaction into rod-shaped form.

The paper wrapped filter rod 50 is then passed longitudinally through the diameter measuring system 12 of this invention and is subsequently cut by rod cutter 52 into convenient lengths to form rod segments 54. Diameter measurement data obtained by the system 12 of this invention may then be passed via signal 55 to a suitable monitor/controller 56 which compares the measured data to stored set point data. One preferred monitor/controller is the Model 182 Processor commercially available from the LaserMike Division of the Techmet Company, Dayton, Ohio. Monitor/controller 56 may then issue an error signal 57 so as to controllably adjust actuator 58 which serves to reduce or increase the cross-sectional dimension of the rod-forming garniture 38, for example, by relative displacement between stationary and movable trumpet folders which are not shown but the details of which are well known in this art. In such a manner, the resulting diameter of the formed filter rod 50 is responsively increased or decreased.

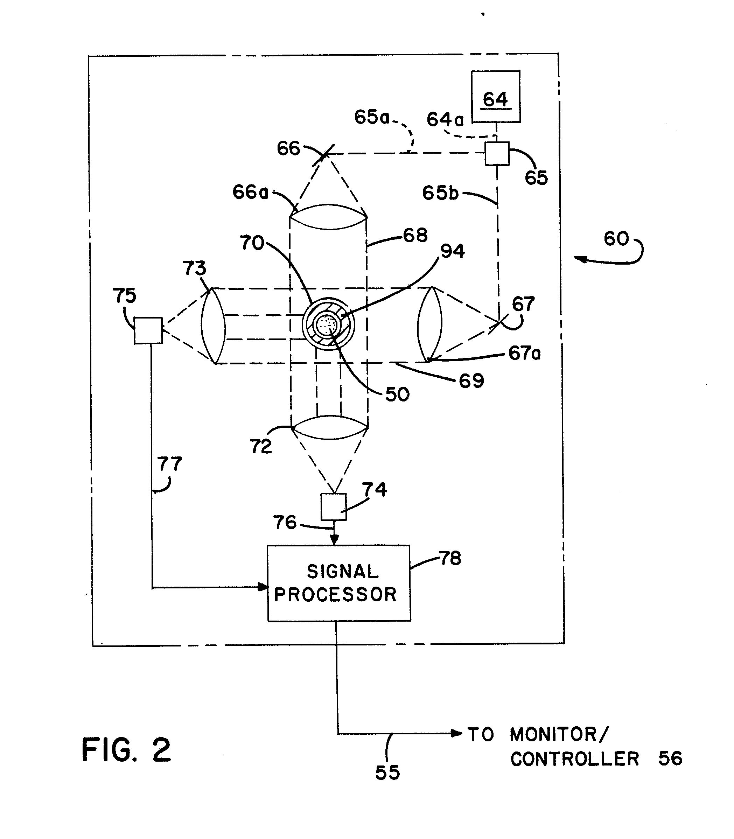

The system 12 of this invention generally includes a noncontact type diameter-measuring apparatus 60 and mounting structure 62 which mounts the diameter-measuring apparatus 60 for oscillatory motion about the longitudinal axis of rod 50. Diameter-measuring apparatus 60 is, in and of itself, well known and in a preferred embodiment is Model No. 161-00 commercially available from the Laser-Mike Division of the Techmet Company, Dayton, Ohio. A schematic representation of such a preferred diameter-measuring apparatus 60 is shown in accompanying Figure 2.

As can be seen, the preferred diameter-measuring apparatus 60 generally includes a laser light emitter device 64 which emits a laser light beam 64a. Beam splitter 65 splits beam 64a into a pair of beams 65a, 65b, respectively, and directs them towards scanning mirrors 66, 67. As is well known, mirrors 66, 67 are rotated by means of precision electric motors (not shown) so as to scan beams 65a, 65b in a time-based manner through optical lens systems 66a, 67a which align beams 65a, 65b into parallel beam fields 68, 69 and project them towards receiving lens systems 72, 73, respectively. The beam fields 68, 69 thus project transversely relative to the filter rod 50 within bore 70 of apparatus 60 so as to produce a "shadow profile" thereof. That portion of light beam fields 68, 69 which is not blocked by the presence of filter rod 50 in the bore 70 is thus detected via suitable photo detectors 74, 75 which generate time-based measurement signals 76, 77 supplied to signal processor 78. Signal processor 78 correlates signals 76, 77 by determining the time interval between the edges of the "shadow" and converts the same to a linear dimension so as to issue a measurement signal 55 indicative of the diameter of rod 50. Measurement signal 55 may then be passed to monitor/controller 56 so as to permit monitoring and/or control of the diameter of rod 50 as has previously been discussed. The measurement signal 55 is thus correlated by means of controller 52 into a diameter dimension of rod 50 according to algorithms well known in the art. Although Figure 2 has been described with reference to a diameter measuring apparatus 60 which emits a pair beam fields 68, 69, in practice, any number of beam fields (including a single beam field) could be employed. It therefore should be understood that the pair of beam fields 68, 69 shown in Figure 2 is for explanatory purposes only and is nonlimiting with respect to this invention.

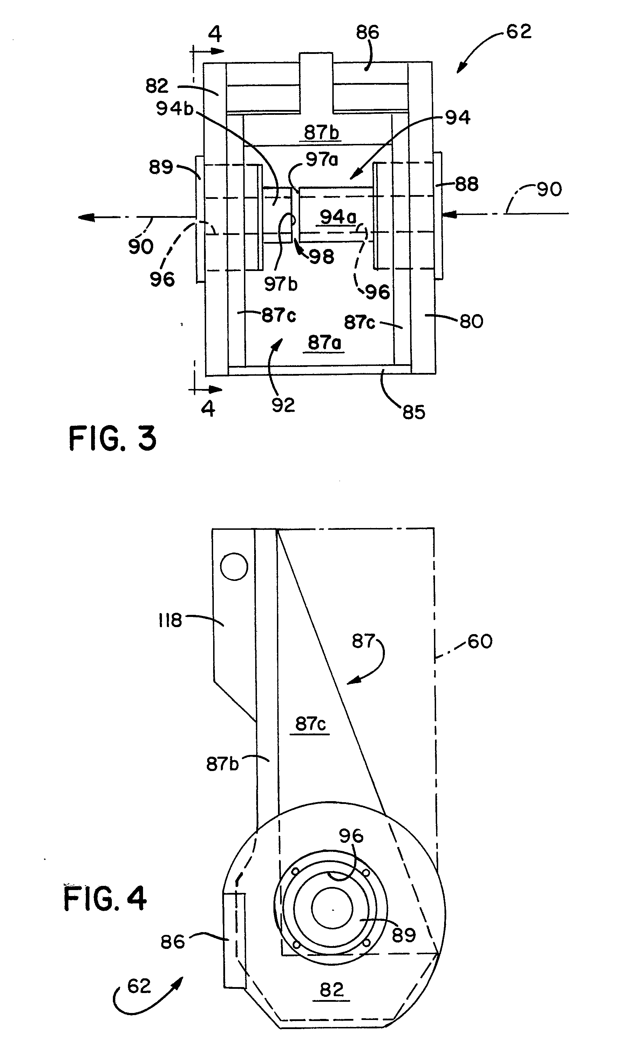

The mounting structure 62 of this invention for mounting the diameter-measuring apparatus 60 described above is shown more specifically in accompanying Figures 3-4. As can be seen in these Figures, the mounting structure 62 includes a pair of flanges 80, 82 which are spaced apart from one another in the direction of movement of the cigarette filter rod along its longitudinal path of conveyance which is coincident with the longitudinal axis of filter rod 50, the path of conveyance and the longitudinal axis of rod 50 being collectively shown in the drawings as reference numeral 90. The flanges 80, 82 are rigidly attached to one another via cross-support member 86 which also facilitates rigid attachment of flanges 80, 82 to the supporting structure of the apparatus to which it is associated (for example, garniture 38, see Figure 1) by any suitable securing means (e.g. bolts).

A support platform 87 is journally coupled to the pair of support flanges 80, 82 via bushings, 88, 89, so that the support platform 87 is capable of pivotal movements about the central axis 90 of the filter rod's path of conveyance (arrow 90 in Figure 3). The support platform 87 includes a bottom wall 87a, a rear wall 87b and a pair of opposing side walls 87c rigidly joined to one another thereby establishing a mounting space 92 for accepting the diameter-measuring apparatus 60 therein. The support platform 87 also includes a spindle 94 which mates within the bore 70 (see Figure 2) of the diameter-measuring apparatus 60 so that the support platform 87 and the diameter-measuring apparatus 60 will rotate as a contiguous unit about the longitudinal axis 90 of the filter rod.

The spindle 94 defines a cylindrical opening 96 coaxially aligned with the axis 90 of the filter rod so that the rod 50 will pass therethrough as it is longitudinally conveyed along its path of conveyance. The spindle 94 is preferably comprised of subspindles 94a, 94b each of which projects inwardly from bushings 88, 89 associated with a respective one of the side walls 87c of the platform 87. The confronting inner end surfaces 97a, 97b of the subspindles 94a, 94b thus establish therebetween an annular slot 98 which is transverse to the longitudinal axis 90 and positioned so as to be coincident with the plane of the beam fields 68, 69 emitted by diameter-measuring apparatus 60 (see Figure 2). Since the transverse slot 98 is in open communication with the cylindrical opening 96 of spindle 94, the planar beam fields 68, 69 will be projected transversely relative to the cigarette filter rod 50 without obstruction by the spindle 94.

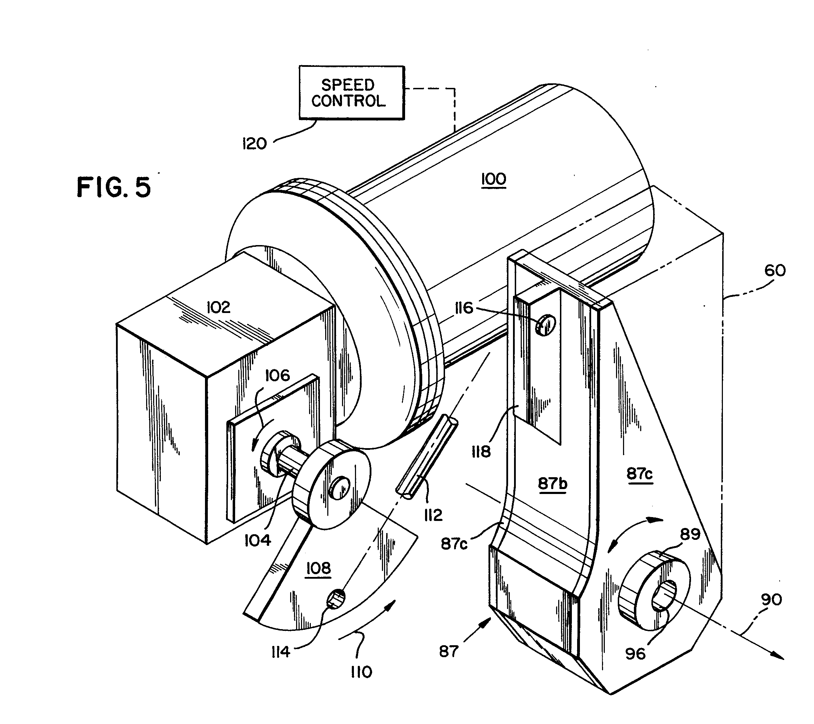

As mentioned previously, the drive means which drives the support platform for rotational motion about the longitudinal axis of the filter rod can be of any convenient type. Preferably, the drive means is that shown in accompanying Figure 5 (the flanges 80, 82 are not shown in Figure 5 for clarity of presentation). As is seen, the output of a motor 100 is connected via a gear box 102 so as to rotate an output shaft 104 in the direction of arrow 106. A cam member 108 is coupled to the output shaft 104 so as to rotate in the direction noted by arrow 110 in Figure 5 concurrently with the rotation of shaft 104. A linkage shaft 112 is connected at its one end to the cam member 108 via a pivot pin 114 and is similarly connected at its other end via a pivot pin 116 to a central rib portion 118 rearwardly projecting from the rear wall of the support platform 87. In such a manner, rotation of the cam member 108 will be transferred via the linkage shaft 112 to the support platform 87 so as to responsively cause reciprocal oscillatory motion of the support platform 87 about the longitudinal axis 90 of the filter rod 50. Preferably, the motor 100 is of a variable speed type, which includes a speed control mechanism 120 so as to permit control to be exercised over the oscillation rate of the support platform 87.

The cam member 108 and linkage shaft 112 are preferably selected so that the support platform 87 will oscillate between its forwardmost and rearwardmost positions to thereby circumscribe an arc of about 45°. However, by selectively changing the position of the pivot pin 114 vis-a-vis the output shaft 104 and/or reducing or increasing the length of linkage shaft 112, one can enable the support platform to circumscribe any desirable arc greater than or less than 45°.

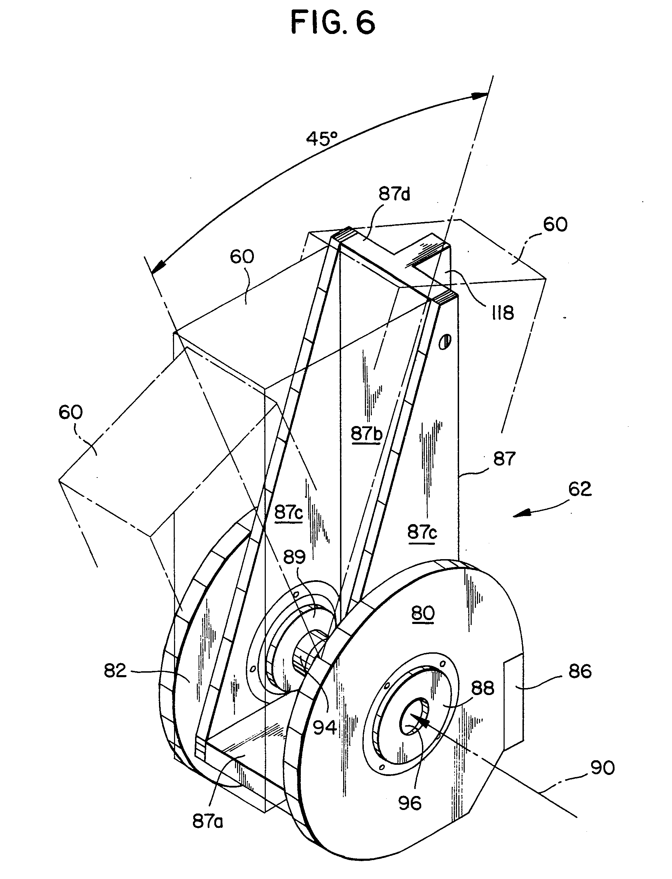

In operation and with particular reference to Figure 6, a cigarette filter rod 50 formed in garniture 38 will pass through the cylindrical opening of the spindle. The motor speed control 120 (see Figure 5) will be set so as to continuously reciprocally oscillate the support platform 87 at a desired rate between forwardmost and rearwardmost positions (noted in phantom lines in Figure 6). The beam fields 68, 69 generated by the diameter measuring apparatus 60 will thus project transversely relative to the cigarette filter rod 50 and will likewise oscillate, concurrently with the support platform 87, within a plane transverse to the cigarette filter rod 50. As can be appreciated, such continuous reciprocal oscillation of the diameter-measuring apparatus 60 provided via the oscillatory motion of the support platform 87 will, in effect, enable the apparatus 60 to "see" an expanded peripheral portion of the cigarette filter rod than would otherwise occur with diameter-measuring apparatus being maintained in a stationary mode. This ability to "see" expanded peripheral portions of the cigarette filter rod 50 thus normalizes surface irregularities and imperfections which inherently exist in the cigarette filter rod 50. As such, the data provided to monitor/controller 56 will represent a more true representation of the diameter of the filter rod 50, thereby permitting more accurate monitoring and/or control thereof.

While the present invention has been herein described in terms of what is presently conceived to be the most preferred and exemplary embodiment thereof, those in this art may recognize that many modifications may be made thereto, which modifications shall be accorded the broadest scope of the appended claims so as to encompass all equivalent structures, assemblies and/or systems.

**Claims**

1. Mounting structure adapted to mount a diameter-measuring apparatus of the type including a bore for longitudinally receiving a cylindrical object whose diameter is to be measured, and light beam emitter/detector means for emitting at least one light beam across said bore in a plane transverse to a longitudinal axis of said cylindrical object and for detecting that portion of said light beam not blocked by the presence of said object in said bore so as to obtain therefrom a measure of said object's diameter, said mounting structure comprising;

a pair of fixed-position spaced-apart support flanges,

a support platform positioned between said pair of support flanges and sized and configured to support said diameter-measuring apparatus so that said bore thereof is coaxially aligned with said longitudinal axis of said object during measurement of said object's diameter,

journal means for journally coupling said support platform to said pair of support flanges for permitting oscillatory motion of said support platform about said longitudinal axis;

said support platform including a spindle adapted to being mateably engaged within said bore of said diameter-measuring apparatus, said spindle defining (i) a cylindrical opening coaxially aligned with said longitudinal axis of said object, and (ii) an annular slot transverse to said longitudinal axis and positioned so as to be coincident with said plane of said emitted light beam, whereby said light beam oscillates within said plane unobstructed by said spindle when said support platform oscillates.

2. Mounting structure as in claim 1 further comprising drive means operatively connected to said support platform for oscillating said support platform about said longitudinal axis.

3. Mounting structure as in claim 2 wherein said drive means includes a variable speed motor and linkage means for interconnecting said motor and said support platform.

4. Mounting structure as in claim 3 wherein said linkage means includes a cam rotatable by means of said motor and a shaft having one end pivotally coupled to said support platform and another end pivotally coupled to said cam.

5. Mounting structure as in claim 1 wherein said spindle includes a pair of subspindles each projecting inwardly in relation to said bore of said diameter-measuring apparatus and terminating in an end surface which is in confronting spaced relation to the end surface of the other subspindle thereby defining said slot therebetween.

6. Mounting structure as in claim 5 wherein said support platform includes a pair of spaced-apart side walls each being positioned adjacent to a respective one of said support flanges, said sidewalls defining therebetween a mounting space for mounting said diameter-measuring apparatus therein.

7. Mounting structure as in claim 6 wherein said journal means journally couples each said side wall to a respective one of said support flanges.

Mounting structure as in claim 6 wherein each said subspindle is connected to said journal means and inwardly projects therefrom so that each said end surface thereof is disposed in said mounting space.

9. System to measure the diameter of a cylindrical object being longitudinally conveyed along a path, said system comprising:

diameter-measuring means for measuring the diameter of said object and including a cylindrical bore and light beam emitter/detector means for (a) emitting a light beam across said bore in a plane transverse to said path, (b) detecting that portion of said light beam not blocked by the presence of said object within said bore, and (c) deriving the diameter of said object in response to said detected portion of said light beam; and

mounting means for mounting said diameter-measuring means such that said bore is coaxially aligned with said path, said mounting means including:

(i) a pair of fixed-position, support flanges spaced apart from one another in the direction of said path,

(ii) a support platform positioned between said pair of support flanges and sized and configured to support said diameter-measuring means so that said bore thereof is coaxially aligned with said path to thereby establish as portion of said path; and

(iii) journal means for coupling said support platform to said pair of support flanges to permit said support platform, and thus said diameter-measuring means, to oscillate about a central axis defined by said path;

(iv) said support platform including a spindle mated within said bore of said diameter-measuring apparatus, said spindle defining

(1) a cylindrical opening coaxially aligned with said central axis defined by said path so that said object will pass longitudinally therethrough as it is conveyed along said path, and

(2) an annular slot transverse to said central axis and positioned so as to be coincident with said plane of said emitted light beam whereby said light beam oscillates, concurrently with said support platform, within said plane unobstructed by said spindle.

10. A system as in claim 9 further comprising drive means connected to said support platform for oscillating said support platform about said central axis.

11. A system as in claim 9 wherein said support platform includes a bottom wall, a rear wall, and a pair of side walls separated from one another along said path, said bottom, rear and side walls establishing a mounting space for accommodating at least a portion of said diameter-measuring means.

12. In combination with a cigarette filter rod-making apparatus of the type having means for forming a mass of continuous filamentary material into a rod and conveying said rod longitudinally along a path, the improvement comprising:

diameter-measuring means for measuring the diameter of said formed rod and including,

(a) a cylindrical bore coaxially aligned with said path; and

(b) light beam emitter/detector means for (i) emitting a light beam across said bore in a plane transverse to said path, (ii) detecting that portion of said light beam not blocked by the presence of said rod within said bore, and (iii) deriving the diameter of said object in response to said detected portion of said light beam;

means for mounting said diameter-measuring means to said rod-making apparatus so that said diameter-measuring means is capable of oscillatory motion about said path, said mounting means including,

(1) a pair of support flanges spaced-apart along said path and immovably coupled to said rod-making apparatus,

(2) a support platform positioned between said pair of support flanges and sized and configured to support said diameter-measuring means so that said bore thereof is coaxially aligned with, and thereby establishes, a portion of said path, and

(3) journal means for journally coupling said support platform to said pair of support flanges to permit said support platform, and thus said diameter-measuring means, to oscillate about a central axis defined by said path;

(4) said support platform including a spindle mated with said bore of said diameter-measuring means, said spindle defining,

(a) a cylindrical opening coaxially aligned with said central axis defined by said path so that said object will pass longitudinally therethrough as it is conveyed along said path, and

(b) an annular slot transverse to said central axis and positioned so as to be coincident with said plane of said emitted light beam whereby said light beam oscillates, concurrently with said support platform, within said plane unobstructed by said spindle.

13. In combination with the apparatus of claim 12, the improvement further comprising drive means connected to said support platform for oscillating said support platform about said central axis.

14. In combination with the apparatus of claim 12, the improvement wherein said support platform includes a bottom wall, a rear wall, and a pair of side walls separated from one another along said path, said bottom, rear and side walls establishing a mounting space for accommodating, and thus supporting, at least a portion of said diameter-measuring means.

FIG. I

FIG. 2

**FIG. 3**

**FIG. 4**

FIG. 5

SPEED CONTROL

120

100

102

106

104

108

114

110

112

116

118

87b

87c

87c

87

89

96

90

60

0294211

## FIG. 6